# EUROPEAN PATENT APPLICATION

(11) **EP 1 780 838 A2**
(43) Date of publication of application: **02.05.2007**
(21) Application number: 06020597.8
(22) Date of filing: 29.09.2006
(51) Int. Cl.: H01R 13/631

(54) **Connector power system and method thereof**

(30) Priority: 25.10.2005 US 259214
(71) Applicant: Hewlett-Packard Development Company, L.P., Houston, TX 77070 (US)
(72) Inventor: Lakdawala, Rahul, Houston, Texas 77070 (US); Waddell, Hugh, Houston, Texas 77070 (US); Fry, Walter, Houston, Texas 77070 (US); Deluga, Ron, Houston, Texas 77070 (US)
(74) Representative: Schoppe, Fritz

(57) **Abstract**

A connector power system (10) comprising a connector (12) having at least one alignment post (36, 38), the at least one alignment post (36, 38) configured to provide power to an electronic device (22) coupled to the connector (12) through the alignment post (36, 38).

## Description

### BACKGROUND OF THE INVENTION

Electronic devices, such as laptop or notebook computers, are designed having a variety of different functional capabilities and, correspondingly, power requirements. However, because of the varying power requirements of such electronic devices, various models and/or types of docking stations and/or power adapters, especially older model docking stations and power adapters, are unable to provide a sufficient level of power to enable full use of the capabilities of the particular electronic device.

### BRIEF DESCRIPTION OF THE DRAWINGS

For a more complete understanding of the present invention and the advantages thereof, reference is now made to the following descriptions taken in connection with the accompanying drawings in which:

FIGURE 1 is a diagram illustrating an embodiment of a connector power system in accordance with the present invention;

FIGURE 2 is a diagram illustrating a connector power system in accordance with the present invention; and

FIGURE 3 is a diagram illustrating another embodiment of a connector power system in accordance with the present invention.

### DETAILED DESCRIPTION OF THE DRAWINGS

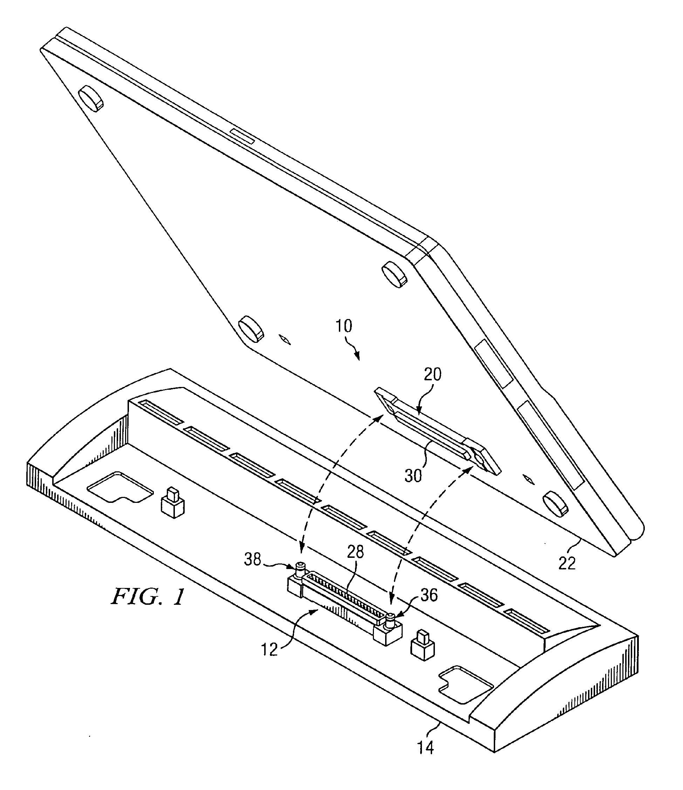

The preferred embodiments of the present invention and the advantages thereof are best understood by referring to FIGURES 1-3 of the drawings, like numerals being used for like and corresponding parts of the various drawings.

FIGURE 1 is a diagram illustrating an embodiment of a connector power system 10 in accordance with the present invention. In the embodiment illustrated in FIGURE 1, system 10 comprises a connector 12 disposed on a docking station 14, and a connector 20 disposed on an electronic device 22. Electronic device 22 may comprise any type of dockable device such as, but not limited to, a portable computer (e.g., a notebook or tablet computer), camera, etc. Further, it should be understood that connectors 12 and 20 may each be disposed on different types of devices (e.g., for non-docking applications) such as, but not limited to, a desktop computer, portable laptop or notebook computer, tablet computer, docking cradle, personal digital assistant, or other types of portable or non-portable electronic devices. Further, it should be understood that connectors 12 and 20 may be configured independent of an electronic device (e.g., as part of a connector cable assembly).

In the embodiment illustrated in FIGURE 1, electronic device 22 comprises a portable electronic device configured to be communicatively coupled to docking station 14 by engaging connector 20 with connector 12. As illustrated in FIGURE 1, connector 12 comprises a set of signal pins 28 configured to engage corresponding signal pin receptacles 30 disposed in connector 20 for transmitting various types of data signals between electronic device 22 and docking station 14. In the embodiment illustrated in FIGURE 1, connector 12 comprises alignment posts 36 and 38 to align and/or otherwise facilitate mating engagement of connector 20 with connector 12. It should be understood that the locations of connectors 12 and 20 may also be reversed (e.g., connector 12 disposed on electronic device 22 and connector 20 disposed on docking station 14). Connectors 12 and 20 may be secured and/or otherwise releasably connected to respective surfaces of device 22 and docking station 14 using a variety of different devices and/or methods (e.g., screw elements, clamps or clips, etc.).

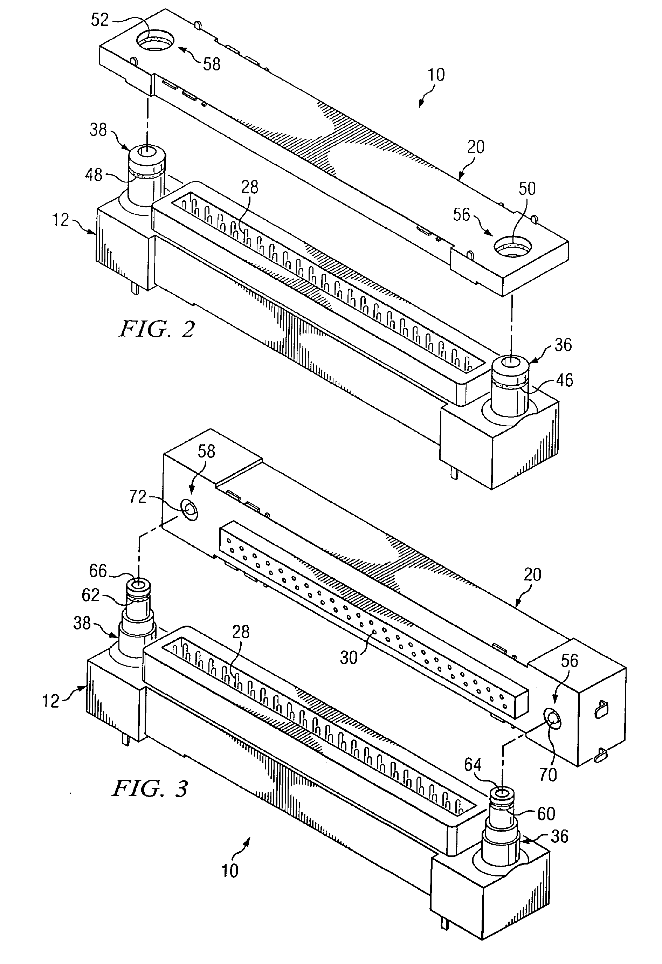

FIGURE 2 is a diagram illustrating an embodiment of power connector system 10 in accordance with the present invention. Embodiments of the present invention use alignment posts 36 and/or 38 of connector 12, and corresponding alignment post receptacles on connector 20, to provide an additional source and/or level of power input to electronic device 22 (FIGURE 1) (e.g., an additional source and/or level of direct current (DC) power). For example, in some embodiments of the present invention, electronic device 22 (FIGURE 1) is configured to receive power from a battery source (e.g., an internal and/or external battery) and/or an alternating current (AC) power source (e.g., an external AC outlet or AC power adaptor). System 10 enables an additional power supply to be provided to electronic device 22, besides another source of power (e.g., in addition to another internal source of power or another external source of power). In FIGURE 2, two alignment posts 36 and 38 are illustrated for providing an additional source and/or level of power input. However, it should be understood that a greater or fewer quantity of alignment posts may be used.

In the embodiment illustrated in FIGURE 2, alignment posts 36 and 38 are configured to provide both a positive power input (e.g., a DC power input) and a ground. For example, in the embodiment illustrated FIGURE 2, alignment posts 36 and 38 each comprise a conductive element 46 and 48, respectively, for engaging and/or otherwise cooperating with respective conductive elements 50 and 52 disposed within respective alignment post receptacles 56 and 58 of connector 20. In the embodiment illustrated in FIGURE 2, one of alignment posts 36 or 38 is configured to provide a positive power input and another one of alignment posts 36 or 38 is configured to provide a ground. For example, in one embodiment of the present invention, alignment post 36 is configured to provide a positive power input to electronic device 22 (FIGURE 1) via engagement of conductive element 46 with conductive element 50 when connector 12 is in engagement of with connector 20, and alignment post 38 is configured to provide a ground via engagement of conductive element 48 with conductive element 52. It should be understood that the alignment post 36 and 38 providing a positive power input and a ground path may be reversed in other embodiments. It should also be understood that alignment posts 36 and/or 38 may be otherwise configured to provide a positive power input and a ground (e.g., alignment posts 36 and/or 38 and respective receptacles 56 and 58 may be configured having a variety of conductive/insulator configurations to provide power or ground through a particular alignment post 36 or 38 or providing both a positive power input and ground through a single alignment post 36 or 38). It should also be understood that connectors 20 and 22 may be manufactured in variety of different configurations to provide an internal conductive path to alignment posts 36 and 38 and/or receptacles 56 and 58, respectively, corresponding to a location or configuration of a conductive element on docking station 14 and/or electronic device 22 for providing/receiving the power/ground inputs.

FIGURE 3 is a diagram illustrating another embodiment of connector power system 10 in accordance with the present invention. In the embodiment illustrated in FIGURE 3, alignment posts 36 and 38 are each configured as a DC jack having at least one insulator 60 and 62 and an internal or central conductive opening 64 and 66 for engaging and/or otherwise cooperating with receptacle posts 70 and 72 of receptacles 56 and 58, respectively. Thus, in the embodiment illustrated in FIGURE 3, each alignment post 36 and 38 is configured to provide both a positive power input and a ground to electronic device 22 (FIGURE 1) using engagement of receptacles 56 and 58 with alignment posts 36 and 38, respectively. Thus, in the embodiment illustrated in FIGURE 3, alignment posts 36 and 38 provide two additional power input sources for electronic device 22 (FIGURE 1).

Thus, embodiments of the present invention enable an additional power input to electronic device 22 (FIGURE 1) using connectors 20 and 22. A particular advantage of embodiments the present invention is the ability to use connector power system 10 even when electronic device 22 (FIGURE 1) is not configured to receive additional power input through connector 20. For example, in an embodiment where electronic device 22 (FIGURE 1) is not configured for receiving power through connector 12, alignment posts 36 and 38 remain useable for alignment purposes even though no power will be provided to electronic device 22 through alignment posts 36 and 38. Thus, embodiments of the present invention provide additional adaptability, stability and/or configurability to be used with electronic devices 22 (FIGURE 1) whether or not such electronic devices 22 are configured for receiving power input through connector 20 by alignment posts 36 and 38.

## Claims

1. A connector power system (10), comprising:
a connector (12) having at least one alignment post (36, 38), the at least one alignment post (36, 38) configured to provide power to an electronic device (22) when coupled to the connector (12).

2. The system (10) of Claim 1, wherein the power comprises direct current (DC) power.

3. The system (10) of Claim 1, wherein the at least one alignment post (36, 38) is configured to provide a positive power input.

4. The system (10) of Claim 3, wherein the connector (12) comprises another alignment post (38, 36) configured to provide a ground.

5. The system (10) of Claim 1, wherein the at least one alignment post (36, 38) is configured to provide a positive power input and a ground.

6. The system (10) of Claim 1, wherein the at least one alignment post (36, 38) comprises a central opening (64, 66) configured to engage a connector receptacle post (70, 72) disposed on the electronic device (22).

7. A method for manufacturing a connector power system (10), comprising:
providing a connector (12) having at least one alignment post (36, 38), the at least one alignment post (36, 38) configured to provide power to an electronic device (22) coupled to the connector (12).

8. The method of Claim 7, further comprising configuring the at least one alignment post (36, 38) to provide a positive power input.

9. The method of Claim 8, further comprising configuring the connector (12) with another alignment post (38, 36) for providing a ground.

10. The method of Claim 7, further comprising configuring the at least one alignment post (36, 38) to provide a positive power input and a ground.
